# EUROPEAN PATENT APPLICATION

(11) **EP 2 261 766 A2**
(43) Date of publication of application: **15.12.2010**
(21) Application number: 10163539.9
(22) Date of filing: 21.05.2010
(51) Int. Cl.: G06F 1/08, G06F 1/32

(54) **Clock circuit for a digital circuit**

(30) Priority: 22.05.2009 GB 0908882
(71) Applicant: Zarlink Semiconductor Inc., Kanata, Ontario K2K 3H4 (CA)
(72) Inventor: Gaulin, Louise, Nepean Ontario K2H 1A8 (CA); Seido, Maamoun Abou, Kanata Ontario K2T 1H5 (CA); Rodrigues, Silvana Goncala, Kanata Ontario K2M 2N5 (CA)
(74) Representative: Harding, Richard Patrick

(57) **Abstract**

A method of saving power in a digital circuit driven by a clock running at a rate R, comprising reducing said rate R to a lower rate R' during periods when said digital circuit is operating at a capacity less than its maximum capacity, and wherein the change from rate R to rate R' is carried out as a smooth transition.

## Description

### Field of the Invention

This invention relates to the generation of clock signals for digital circuits, and in particular to a clock circuit with a sleep mode, suitable for use, for example in telecommunications network equipment.

### Background of the Invention

Digital equipment is driven by clock signals, which control the sequencing of operations within the digital circuitry. The power consumption of the digital components is related to the frequency of the clock signals. The higher the frequency of the clock, the higher will be the power consumption. Energy efficient technology is becoming increasingly important in the telecommunications field as the world moves toward a greener environment. For example, the new IEEE 802.3 Ethernet standard mandates an energy efficient Ethernet.

A power down mode is available in current equipment, but this does not allow for active monitoring of the link. Also, the recovery after a power down mode is not error free, and furthermore the power down mode does not permit power to be reduced or increased on the fly. In the power down mode, the clock typically remains running while the rest of the circuitry is shut down.

US patent Publication No. 2003/0074595 discloses an apparatus for dynamically altering the output clock from an input clock based on the value of an integer. However, in this publication the clock always remains running even in the absence of the need for processing.

### Summary of the Invention

Embodiments of the present invention achieves energy conservation by changing the clock speed to a reduced rate when the equipment is not being used at full capacity, and when no activity is present, the clock can be stopped entirely. For example, in the case of an Ethernet link running at 10 Gb/s, if the link is operating at full capacity, the clock speed will be at a maximum. If the link is operating at less than full capacity, the Ethernet speed can be continuously changed according to the level of utilization on-the-fly. Similar techniques allow for on-the-fly restoration of nominal clock rates when the link is operating at full capacity.

According to the present invention there is provided a clock circuit for a digital circuit designed to be driven by a clock running at a rate *R*, wherein *R* = 1/*P* and *P* is the period, comprising: a high speed clock with period *P_{HS}*; a controller having a clock enable input, an input for accepting an integer *n*, and an input for accepting an integer *q*; a numerical clock generator for generating output clocks with period *P*, and *P* + *m*, wherein *P* = *n* * *P_{HS}*, and *m* is an integer; a glitchless clock selector for selecting one of said output clocks in response to a signal from said controller; and wherein said controller is responsive to a clock disable/enable signal to stop and start said output clocks, and further wherein said controller is configured to reduce the clock rate *R* to a lower rate *R*' during periods when said digital circuit is operating at reduced capacity, wherein said controller is configured to insert *q* quiescent cycles during the changeover from clock rate *R* to the lower rate *R*', and wherein in response to a clock disable signal said controller is configured stop the output clock until a new clock enable signal is received..

The frequency of the clock can be reduced in a smooth way by counting the rising and falling edge and programming the starting and stopping of the clock, thus reducing the frequency, coordinating and scheduling clock transitions (rate change, stop or start of a clock) for different clock rates in order to reduce or increase the frequency, and issuing a command from an on-board processor to command the clock to slow down or speed up, or stop thus increasing or reducing the clock frequency.

Embodiments of the invention offer the ability to create a fully managed clock such that the user can program the instance of time the clock needs to switch to off mode or the clock needs to switch to a lower frequency rate. The user can program the instance of time the clock needs to start or speed up. The user can also program a transition to occur on the rising edge or the falling edge.

The clock programmability should guarantee that no clock glitches occur, or that any glitches that do occur do not disturb the operation of the receiver circuitry.
In another aspect the invention provides a method of saving power in a digital circuit nominally running at a rate *R*, wherein *R* = 1/*P* and *P* is the period, the method comprising: generating a high speed clock with period *P_{HS}*; using a numerical clock generator to generate output clocks with period *P*, and *P* + *m*, wherein *P* = *n* * *P_{HS},* and m is an integer; reducing the clock rate *R* to a lower rate *R*' during periods when said digital circuit is operating at reduced capacity; inserting *q* quiescent cycles during the changeover from clock rate *R* to the lower rate *R*'; and in response to a clock disable signal stopping the output clock until a new clock enable signal is received.

### Detailed Description of the Preferred Embodiments

The invention will now be described in more detail, by way of example only, with reference to the accompanying drawings, in which:-

Figure 1 is timing diagram showing smooth clock transitions;

Figure 2 is a timing diagram with a quiescent period;

Figure 3 is a block diagram of an device for effecting a smooth transition;

Figure 4 is a flow chart illustrating the procedure involved in effecting the smooth transition; and

Figure 5 is a high-level block diagram of clock circuit in accordance with an embodiment of the invention.

### Detailed Description of the Preferred Embodiments

Embodiments of the present invention reduce power consumption by reducing clock speed when the digital circuits are not operating at full capacity. The problem is that circuits or Integrated Circuits (IC) that require an input clock cannot function properly if the clock was interrupted or clock rate changed unless it is designed to allow for such change because they cannot accept a sudden transition in clock rate. Embodiments of the present invention allow ICs which are not specifically designed to accept a clock rate change to work when such clock rate is changed. These circuits will experience lower throughput when clock rate is reduced.

For example, a GE Ethernet PHY is expected to work with an internal clock rate of 1 GHz. Such ICs expect an input clock of 25MHz or 125MHz. Reducing the clock rate for such circuitry lowers the power dissipation and also lowers effective data throughput. However, in order to do so, it would normally be necessary to power down the circuits. The proposed clock management technique allows such clock rate change to be applied to ICs, which might not usually tolerate clock rate change by ensuring a smooth transition.

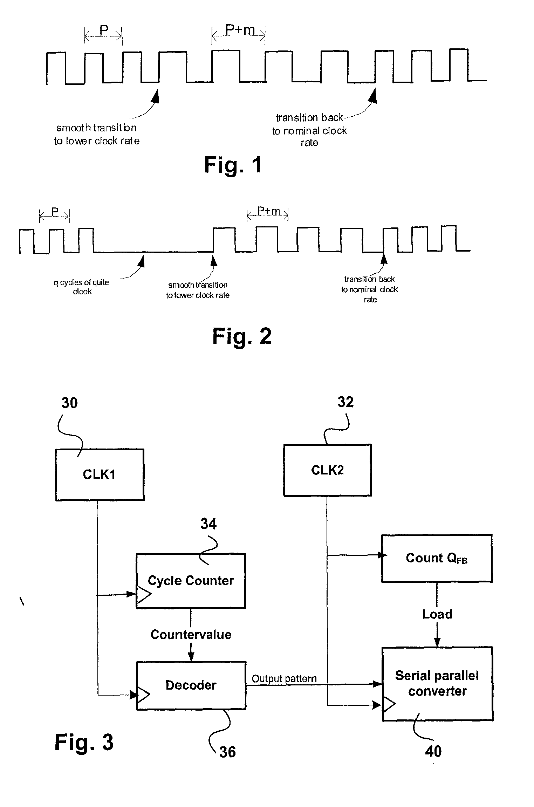

With reference to Figure 1, consider the case where an integrated circuit (IC) triggers on the trigger edge of the clock (The trigger edge may be either the rising or falling edge) and expects a clock period of value P and a clock duty cycle of D percent., the duty cycle be the ratio of the high state to the period. Such a circuit would normally be expected to function properly if the input clock has a clock period which is P seconds or greater, i.e. a slower frequency clock, as long as the duty cycle of the clock remains within the D seconds tolerance.

A smooth transition in clock rate occurs when the period is changed without disturbing the IC operation. The smooth transition will guarantee that the clock period will change at specific instant of time from value P seconds to an exact predetermined value of P+m seconds.

In the example shown in Figure 1, the IC that operates on the rising edge of the clock. The clock period transitions smoothly from P to P+m at point A and back again to a period of P at point B. Between A and B the pulse width is broadened so that the duty cycle remains within the tolerance limits of the IC.

A smooth transition can also be achieved by passing through periods of silent clock as shown in Figure 2. This case starts with a clock 10 of period P, then passes through a quiet period 12 of q cycles before starting a period at low speed clock 14 with a period of P+m. A quiet clock means periods of low level if the clock is active on the rising edge or periods of high level if the clock is active on the falling edge. The clock then transitions back to the normal period 16. The timing diagram shown in Figure 2 is based on a clock active on rising edge.

The technique used to ensure a smooth clock transition is dependent on the processes that create the initial clock. In accordance with an exemplary embodiment of the invention, the smooth transition is ensured by using a numerical technique that creates a low speed clock (with period P) from a high speed clock (with period P/n, where n is an integer). Such a numerical clock generation techniques allow for a change in clock rate without use of a PLL. As a result, the performance is linear and predictable.

Such a numerical technique can be implemented by a frequency divider as described in Co-pending US Patent Application No. 12/179,712 (EP 2020629), the contents of which are herein incorporated by reference. However, it will be understood that the present invention is not limited to such a solution.

Figure 3 illustrates a counter structure that may be used to implement the invention, although it will be appreciated by one skilled in the art that other techniques can be used. In Figure 3, a high speed clock 32 has a period much smaller than period P, the output of the waveform generator. The high speed clock is generated using a multiplying PLL. Cycle counter 34 counts the output of low speed clock 30 and presents its output to decoder 36, which feeds serial parallel converter 40. Counter 38 counts the output of clock 322, which loads the serial parallel converter 40.

Since the counting is done at a lower rate it is not possible to count the cycles of the high speed clock directly. There is however a relationship between the frequencies of the low speed clock and the high speed clock. For each cycle of the low speed clock, the high speed clock will produce QFB cycles. Thus for each low speed clock cycle QFB, high speed clock cycles must be counted.

The decoding circuit 36 that converts counter values to output values also runs at a lower frequency. For each cycle of clock 30, multiple, that is Q_{FB}, output values, are generated in parallel. The set of output values are placed sequentially on the output at the rate of clock 32.

Parallel-serial converter 40 runs at the speed of the high speed clock 32. A parallel-load shifter loads at each reference cycle the QFB output values into the shift register and successively shifts them out. Alternatively the data is loaded into a register and a multiplexer successively selects them for output as the desired clock of period P.

The above circuit essentially takes a high speed clock and feeds it to a pattern generator, which using a programmable mask of N bits creates the desired clock. The pattern generator controls the instant when the clock is switched to a new rate.

At the instant a clock rate transition is requested the clock is physically stopped for a short duration. The waveform generator is then re-configured to create the clock with period P+m (note the multiplying PLL rate will not change) which is the clock with the lower rate. Clock generation is enabled to guarantee the smooth generation to the clock with the new rate. This process is reversed when a request for a higher rate clock is made

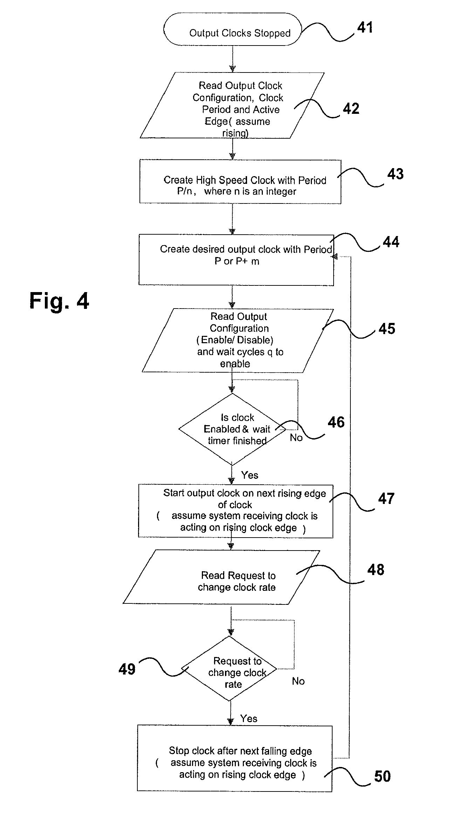

Figure 4 shows the procedure that is implemented when a rate change is or stopping of the clock requested. At step 41, the output clock is stopped. At step 42, the clock is read out, and at step 43 a high speed clock with a period P/n, wherein n is an integer is created.

At step 45 the configuration is again read out. At step 46, a determination is made as to whether the clock is enabled. If so, the procedure moves on to step 47 to start the clock on the next rising edge.

At step 48 a request to change the clock rate is read, and if present (step 49), the clock is stopped on the next falling edge.

The management of the clock generation can be effected by a register access command or by hardware pin assertion or de-assertion.

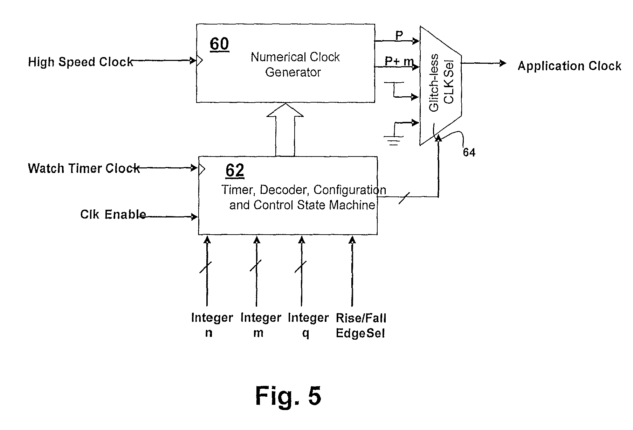

Figure 5 illustrates a embodiment of a clock circuit in accordance with an embodiment of the invention. In Figure 5, the numerical clock generator receives an input with period P/n from a high-speed clock and produces output clocks with periods p and P+m that can be selected by the glitchless clock selector 64.

Controller 62 acting as a timer, decoder configuration and control state machine circuit 62 has six inputs, namely a clock enable input, a wait timer clock, inputs for integers *n, m, and q*, and a rise/fall edge detector for determining whether the switching occurs on the rising or falling edge.

This clock circuit can be used to implement the algorithm described in Figure 4 with the inputs being selectable by the circuit designer. The clock can be designed to sleep for a period of time determined by the watch timer and then, for example, activate at the lower rate to see if data activity is present, and if so how much. If the data activity is high, the clock can then switch from the lower rate to the higher rate seamlessly. Existing sleep circuits do not allow for the processor to be put to sleep by the clock circuit because they inherently require the clock circuit to remain running so that they can know when to wake up. However, having the main clock circuit running continuously when there is no data activity still consumes a significant amount of power. In the present invention, all that is required is a very low power clock to wake up the main clock periodically so as in turn to start the processor and determine whether data activity is present and if so at what level. The clock initially may run at the higher rate, and if the activity is below a threshold, the clock reduces its rate to the lower rate so as to optimize the power consumption. Alternatively, it can start at the lower rate and ramp up to the higher rate if the data activity is high.

It should be appreciated by those skilled in the art that any block diagrams herein represent conceptual views of illustrative circuitry embodying the principles of the invention. For example, a processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

While the method in the invention can be applied to a wide variety of digital circuits, the invention has particularly applicability to routers and small and large switches compliant with Energy Efficient Ethernet - IEEE 802.3az, energy efficient multi service equipment, energy efficient DSLAMs, energy efficient Wireless base stations, energy efficient Wireless routers, and green Ethernet solutions.

## Claims

1. A clock circuit for a digital circuit designed to be driven by a clock running at a rate *R*, wherein *R* = 1/*P* and *P* is the period, comprising:
a high speed clock with period *P_{HS}*;
a controller having a clock enable input, an input for accepting an integer *n*, and an input for accepting an integer *q*;
a numerical clock generator for generating output clocks with period *P*, and *P* + *m*, wherein *P* = *n* * *P_{HS}*, and *m* is an integer;
a glitchless clock selector for selecting one of said output clocks in response to a signal from said controller; and
wherein said controller is responsive to a clock disable/enable signal to stop and start said output clocks, and further wherein said controller is configured to reduce the clock rate *R* to a lower rate *R*' during periods when said digital circuit is operating at reduced capacity, wherein said controller is configured to insert *q* quiescent cycles during the changeover from clock rate *R* to the lower rate *R*', and wherein in response to a clock disable signal said controller is configured stop the output clock until a new clock enable signal is received.

2. A clock circuit as claimed in claim 1, wherein the controller is configured to effect the transition between the rate *R* and the lower rate *R*' by changing the clock period on a trigger edge while varying the pulse width to maintain the duty cycle of the clock within the tolerance limits of the digital circuit.

3. A clock circuit as claimed in claim 1 or 2, wherein the controller also has inputs for selectively setting the variable *m*.

4. A clock circuit as claimed in any one of claims 1 to 3, wherein the controller further has a timer input for receiving a timer clock to wake up the output clocks after they have been stopped for a certain period of time.

5. A clock circuit as claimed in any one of claims 1 to 4, wherein said clock circuit is configured to change rate after being woken up from a sleep mode in response to data activity.

6. A clock circuit as claimed in claim 5, wherein the clock circuit is configured to start at the high rate *R* after being woken up and switch to the lower rate *R*' if the data activity is below a circuit threshold.

7. A method of saving power in a digital circuit nominally running at a rate *R*, wherein *R* = 1/*P* and *P* is the period, the method comprising:
generating a high speed clock with period *P_{HS}*;
using a numerical clock generator to generate output clocks with period *P*, and *P* + *m*, wherein *P* = *n* * *P_{HS},* and m is an integer;
reducing the clock rate *R* to a lower rate *R*' during periods when said digital circuit is operating at reduced capacity;
inserting *q* quiescent cycles during the changeover from clock rate *R* to the lower rate *R*'; and
in response to a clock disable signal stopping the output clock until a new clock enable signal is received.

8. A method as claimed in claim 7, wherein the transition between the rate R and the lower rate *R*' is effected by changing the clock period on a trigger edge while varying the pulse width to maintain the duty cycle of the clock within the tolerance limits of the digital circuit.

9. A method as claimed in claim 7 or 8, wherein the variables n, m and q are user selectable.

10. A method as claimed in any one of claims 7 to 9, wherein numerical clock generator is periodically woken up to determine whether data activity is present.

11. A method as claimed in claim 10, wherein the rate is changed after the numerical clock generator is woken up from sleep mode in response to data activity.

12. A method as claimed in claim 11, wherein the clock circuit outputs a clock at R after being woken up and switches to the lower rate R' if the data activity is below a certain threshold.
